# EUROPEAN PATENT APPLICATION

(11) **EP 1 607 204 A2**
(43) Date of publication of application: **21.12.2005**
(21) Application number: 05076316.8
(22) Date of filing: 06.06.2005
(51) Int. Cl.: B29C 45/14, B62D 29/00, B29C 44/18

(54) **Manufacture of laminar mouldings**

(30) Priority: 15.06.2004 GB 0413404
(71) Applicant: L & L Products, Inc., Romeo, MI 48065 (US)
(72) Inventor: Mendiboure, Jean, 67870 Bischoffsheim (FR); Undereiner, Jean-Jacques, 67280 Oberhaslach (FR); Le Gall, Eric, 67000 Strasbourg (FR)
(74) Representative: Bawden, Peter Charles

(57) **Abstract**

Laminar mouldings consisting of a foamable material (3) adhering to a moulded substrate (5) are produced by providing a piece of foamable material (3) within a mould (1,2) and moulding the substrate (5) within the mould (1,2) at a temperature above the normal foaming temperature of the foamable material so that it adheres to the foamable material but does not cause it to foam, the moulding process may be injection moulding or blow moulding and the mouldings are useful as acoustic baffles or structural reinforcement for automobiles.

## Description

The present invention relates to improvements in or relating to mouldings and in particular to mouldings consisting of a section of foamable material integrally moulded to a substrate in which the foamable material will foam at a temperature below the softening point of the substrate. The invention also relates to a moulding process for the production of such mouldings.

Mouldings consisting of a layer of a foamable material attached to a substrate such as a layer of unfoamable material in which the foamable material will foam at a temperature below the softening point of the substrate are known and find many uses. One example of such materials consists of materials that are used in the production of acoustic baffles such as those used to reduce noise due to air flow in vehicle cavities. These materials typically consist of a foamable layer which can be foamed in a subsequent processing step, such as the baking after e-coat anticorrosion treatment, to produce a highly expanded flexible foam attached to a substrate, typically an unfoamable and unfoamed support layer. These baffles are typically produced by two shot injection moulding wherein the substrate is formed by a first injection moulding process and is then transferred to a second injection moulding machine in which the foamable material is injected around the already formed substrate. In this instance it is important that the two materials be chosen so that the substrate is not deleteriously affected by the conditions used for the moulding of the foamable material. If the foamable material is injected however, the foamable material must be such that it can be moulded so that it adheres to the substrate, remains integral and yet is not foamed during the moulding process. If the substrate is also to be foamed in a subsequent processing step then additional care is required to ensure that the substrate does not foam during the moulding process.

Another example of such mouldings where similar requirements apply is in the production of materials that are used for structural reinforcement in automobiles which consist of a foamable material supported on a substrate which may be foamable or unfoamable. In this instance the foamable material is generally one that will produce a rigid reinforcing foam such as an epoxy foam.

All these processes suffer from the disadvantage that two separate moulding steps are required and that careful moulding conditions must be employed particularly in the second moulding step to ensure adhesion between the foamable and the substrate without any undesirable foaming of the foamable material. The substrate is typically of a material that softens at a temperature above that at which the foamable material will foam. Accordingly since the foamable material must not foam during moulding it is moulded at a temperature considerably below the softening point of the material of the substrate and this can lead to an undesirably weak bond being formed between the foamable material and the substrate. This in turn can require a larger area of contact between the foamable material and the substrate to achieve a satisfactory bond requiring the use of additional amounts of costly, foamable material.

We have now developed a process that overcomes these problems.

The present invention therefore provides a process for the production of laminar mouldings comprising a layer of a foamable material attached to a substrate wherein a piece of foamable material is held within the walls of a mould so that part of the foamable material projects into the mould cavity and the substrate is moulded in the mould at a temperature at which the foamable material normally foams whereby the foamable material adheres to the substrate during the moulding process and remains unfoamed.

We have found for instance that a mould may be provided with a groove in which the foamable material may be retained with part of the foamable material projecting from the groove into the mould cavity. The substrate material may then be injected into the mould around the part of the foamable material that projects into the mould without causing the foamable material to foam to an undesirable extent. We have also found that this can create a strong bond between the substrate and the foamable material. Unlike many conventional moulding processes it may be necessary to apply a small positive pressure as the mould closes around the foamable material in order to hold in place during the moulding of the substrate material. The groove provided in the mould may be shaped in any particular way to produce the appropriate article and may be shaped so that it retains the foamable material lightly in the mould. In addition the mould may be provided with areas designed to structure the substrate in a way that the foamable material can expand across and/or through the substrate as may be desired.

Surprisingly we have found that with the exception of the optional positive pressure on mould closing standard moulding cycles and temperatures can be used to perform the process of the present Invention without causing the foamable material to foam. For example the mould temperature may be regulated to the temperature normally employed for the moulding of the substrate material and the substrate material may be moulded at its normal moulding temperature employing a typical moulding cycle. We prefer to use a moulding cycle of up to 15, more usually up to 10 seconds. We have found that under these conditions a laminar moulding having a strong bond between the foamable material and the substrate may be obtained without substantial foaming of the foamable material. It is believed that some foaming may occur at the surface of the foamable material and that this may be beneficial and may further improve the bond between the foamable material and the substrate.

By way of illustration we have found that a foamable material which would normally foam at a temperature in the range 130 to 230°C may be bonded to a substrate material such as glass filled polyamide which is injection moulded at a temperature of 200 to 220°C by the process of the present invention. We have found that this process may be performed without substantial foaming of the foamable material. A strong bond is formed between the foamable material and the substrate because they come into contact at the moulding temperature of the substrate at which both the foamable material and the substrate material are softened.

In certain mouldings where a ring of foamable material is attached around the perimeter of a carrier such as in some automobile acoustic baffles, we have found that the ring may be attached within a peripheral sandwich structure in which the outer layers are of the carrier are provided as the substrate according to the techniques of the present invention. We have also found that a relatively small area of contact in such a sandwich structure is required to achieve a satisfactory bond between the two materials. This can lead to less foamable material being required leading to savings of the costly foamable material.

Although the present invention is applicable to many different materials and moulding processes it is particularly applicable when the substrate is a thermoplastic material. The substrate may be foamable or unfoamable and the preferred moulding process may be either injection moulding or blow moulding. We have found that when using the techniques of the present invention laminar mouldings can be produced using temperatures for the moulding of the substrate which would typically cause the foamable material to foam. Accordingly if the materials are selected appropriately we have found that a moulding cycle in terms of temperature and time can be developed in which the substrate can be moulded into contact and around the foamable material in a manner that develops a secure bond between the two materials without the foamable material foaming.

The piece of foamable that is placed in the mould may be produced by any suitable process. Extrusion, callending and cutting or die stamping are examples of production techniques that may be used. The preferred technique will depend upon the shape and size of piece of foamable material that is required. Where the foamable material is to be attached to the perimeter of a substrate such as is required in the production of automobile acoustic baffles and may be required in automobile structural reinforcement die cutting is a particularly useful technique.

In the production of acoustic baffles for automobiles and structural reinforcement for automobiles the laminar moulding is frequently mounted in the vehicle body shell (sometimes) known as "body in white". The body shell is then passed through a corrosion dipping bath where an anticorrosion material is deposited on the metal, typically the deposition is electrolytic and the coating process is often known as the e-coat process. After passing through the dipping bath the anticorrosion coating is dried and baked in an oven. In this instance the foamable material is formulated so that foaming will take place at the temperatures employed in the oven so that an additional foaming step is not required. The part is therefore mounted in the body in white in such a way that leaves a clearance between the extremity of the part and the metal to allow flow and deposition of the anticorrosion material. The gap formed by this clearance is then filled by the foaming of the foamable material in the oven. It is important that once foamed the foamable material bonds securely to the carrier material (substrate) and also bonds to the metal of the body shell. In order to ensure this happens the clearance has traditionally been of the order of 3 millimetres. We have found however that the improved bonding between the foamable material and the substrate that is achieved by the process of the present invention allows comparable performance to be obtained using less foamable material and with a 5 millimetre clearance. The larger clearance permitting easier flow of the anticorrosion fluid and hence better cover of the metal and less corrosion.

Where the techniques of the present invention are used for the production of automobile parts means for attachment of the part to the vehicle body may be formed as an integral part of the moulding process. For example clips adapted for receipt within the metal frame of the vehicle may be integrally moulded with the substrate.

The techniques of the present invention are applicable to the production of laminar mouldings in which the substrate is produced by injection moulding or blow moulding the preferred technique depending upon the article to be produced.

In a further embodiment the invention provides a process for the production of mouldings comprising a substrate bonded to a foamable material wherein
i) a piece of foamable material is placed within a mould whereby it is partially retained within the walls of the mould and partially projects into the cavity of the mould;
ii) the mould is closed and a positive pressure is applied to the mould to hold the part of the foamable material within the walls of the mould;
iii) the substrate material is introduced into the mould at a temperature above the softening and foaming temperature of the foamable material in a manner that it surrounds and bonds to at least part of the part of the foamable material that projects into the cavity of the mould;
iv) the moulding cycle is completed and the two component moulding removed.

In a preferred embodiment at certain locations and preferably at all locations the substrate material surrounds substantially all of the part of the foamable material that projects into the cavity of the mould.

It is preferred that no more than 10 millimetres, preferably from 2 to 10 millimetres, more preferably no more than 5 millimetres of foamable material project into the mould cavity since a longer projection can prevent the substrate material contacting a sufficient surface are of the foamable material or surrounding the foamable material during the moulding cycle. It is also preferred that the part of the foamable material that is held within the walls of the mould is no more than 10 millimetres long and is preferably from 2 to 10 millimetres, more preferably 2 to 5 millimetres resulting in a layer of exposed foamable material of that length after moulding. The temperature at which the substrate material is introduced into the mould depends upon the nature of the substrate but for glass reinforced polyamide or polypropylene temperatures in the range 180°C to 235°C are preferred. Foamable materials preferably foam at a temperature in the range 135 to 180°C. The moulding cycle should preferably be completed in less than 15 seconds, preferably less than 10 seconds.

The techniques of the present invention have a wide range of uses. One preferred use is in the production of acoustic baffles for automobiles where the foamable material is such as to produce a highly expanded soft foam typically from polymers such as ethylene unsaturated ester copolymers typically ethylene vinyl acetate copolymers and/or ethylene acrylate copolymers. A particularly preferred material is an olefinic polymer-based acoustic foam, and more particularly an ethylene based polymer. For example, without limitation, in one embodiment, the foamable material is based on ethylene copolymer or terpolymer that may contain a C₃ to C₈ alpha-olefin comonomer. Examples of particularly preferred polymers include ethylene vinyl acetate copolymers, ethylene acrylate copolymers, EPDM, or mixtures thereof. Other examples of preferred foam formulations that are commercially available include polymer-based materials commercially available from L&L Products, inc. of Romeo, Michigan, under the designations as L-2105, L-2100, L-7005 or L-2018, etc.

A number of other suitable materials are known in the art and may also be used for noise attenuation. One such foam includes an open-cell polymeric base material, such as an ethylene-based polymer which, when compounded with appropriate ingredients (typically a blowing and curing agent), expands and cures in a reliable and predictable manner upon the application of heat or the occurrence of a particular ambient condition. From a chemical standpoint for a thermally activated material, the acoustic foam is usually initially processed as a flowable thermoplastic material before curing. It will preferably cross-link upon curing, which makes the material resistant to further flow or change of final shape.

While the preferred materials for fabricating the sound absorption material have been disclosed, the material can be formed of other materials (e.g., foams regarded in the art as structural foams) provided that the material selected is heat-activated or otherwise activated by an ambient condition (e.g. moisture, pressure, time or the like) and cures in a predictable and reliable manner under appropriate conditions for the selected application.

Some other possible materials include, but are not limited to, polyolefin materials, copolymers and terpolymers, phenol/formaldehyde materials, phenoxy materials, and polyurethanes. U.S. Patent Nos. 5,266,133; 5,766,719; 5,755,486; 5,575,526; 5,932,680; and WO 00/27920 describe suitable materials. In general, the desired characteristics of the resulting foam include relatively low glass transition point, and good corrosion resistance properties. In this manner, the material does not generally interfere with the materials systems employed by automobile manufacturers. Moreover, it will withstand the processing conditions typically encountered in the manufacture of a vehicle, such as the e-coat priming, cleaning and degreasing and other coating processes.

In applications where a heat activated, thermally expanding material is employed as a sound absorption material, a consideration involved with the selection and formulation of the material is the temperature at which a material reaction or expansion, and possibly curing, will take place. For instance, in most applications, it is undesirable for the material to be reactive at room temperature or otherwise at the ambient temperature in a production line environment. More typically, the material becomes reactive at higher processing temperatures, such as those encountered in an automobile assembly plant, when the material is processed along with the vehicle components at elevated temperatures or at higher applied energy levels, e.g., during e-coat preparation steps. While temperatures encountered in an automobile e-coat operation may be in the range of about 145° C to about 210°C, primer, filler and paint shop applications are commonly about 93.33°C or higher. The material is therefore selected according to the performance required in these operations. If needed, blowing agent activators can be incorporated into the composition to cause expansion at required temperatures.

Generally, suitable expandable foams have a range of expansion ranging from approximately 100 to over 1000 percent. The level of expansion of the acoustical foam may be to as high as 1500 percent or more.

In another embodiment, the sound absorption material is provided in an encapsulated or partially encapsulated form, for instance an expandable foamable material is encapsulated or partially encapsulated in an adhesive shell. Moreover, the sound absorption material may include a melt-flowable material such as that disclosed in U.S. Patent No. 6,030,701.

In the production of acoustic baffles the substrate is preferably an unfoamable material that supports the foamable material. Typically the substrate is a harder higher melting thermoplastic such as polyamide, which may be filled usually with glass fibre, or polypropylene. Both these materials require higher temperatures for moulding than are required to foam the lower melting foamable material used in acoustic baffles but the techniques of the present invention allow the laminar moulding to be produced without causing undesirable foaming of the foamable material.

The present invention may also be used in the production of parts for the structural reinforcement of hollow sections in automobiles or other transportation systems such as railroad and aircraft. Here the outer foamable layer is generally a rigid reinforcing thermosetting layer such as a foamable epoxy resin or a foamable polyurethane which may be a blocked polyurethane. The foamable material is generally supported on a rigid reinforcing carrier or substrate. In this instance the foamable material serves two main functions, it will expand across the space between the reinforcing member and the interior of the hollow section and will bond to some or all of the interior walls of the hollow section. Accordingly, expandable adhesive material means that the material can be activated to both expand (typically foam) and to act as an adhesive. Activation therefore enables the expandable material to expand and fill a gap between the reinforcing member and a hollow structure it is designed to reinforce and to bond to selected internal surfaces of the hollow structure. Accordingly the expandable adhesive must expand at the desired temperature and be sufficiently adhesive to firmly bond the reinforcing member inside the vehicle structure. Once foamed it should be sufficiently strong that it does not contribute any weakness to the overall reinforcing effect provided.

Prior to activation, the expandable adhesive material is preferably dry and not tacky to the touch, since this facilitates shipping and handling and prevents contamination. Examples of preferred foamable materials include foamable epoxy-base resins and examples of such materials are the products L5206, L5207, L5208 and L5209, which are commercially available from L & L Products of Romeo Michigan USA, and Core 5204, 5206, 5205 and 5208 available from Core Products, Strasbourg, France. The product should be chosen according to the rate of expansion and foam densities required. It is further preferred that it expand at the temperatures experienced in the electrocoat baking oven, typically 160°C to 185°C.

In these reinforcing parts the carrier or a substrate is usually formed from a rigid polymer such as glass fibre reinforced polyamide or polypropylene. Glass fibre reinforced polyamide and polypropylene both require a higher temperature for moulding then the temperature required to foam the lower melting thermosetting epoxy or polyurethane material. However, surprisingly we have found that the injection moulding or blow moulding technique of the pesent invention allows the laminar structure to be formed without causing undesirable foaming of the foamable material. Reinforcing members for simple cross sections may be prepared by blow moulding whilst injection moulding may be required for more complex structures. Where blow moulding is used the substrate may be of metal or thermoplastics; where injection moulding is used thermoplastics are preferred. Polyamides, particularly glass filled polyamides are suitable materials due to their high strength to weight ratio. It is preferred that the moulding is provided with means enabling fluid drainage when the part is in place and the foamable material has foamed. For example, holes may be provided in the moulding to allow the drainage of water, which may condense in the structure over time,

Whilst the invention is applicable to the production of a wide variety of materials it is particularly suitable for the production of reinforcing parts or acoustic insulating parts for automobiles, aircraft, ships, trains and other vehicles. The invention is also useful in the provision of materials useful in the construction industry.

Structural reinforcement can be provided by the provision of a reinforcing member within a hollow structure such as part of an automotive frame. It is known that the reinforcing member may comprise a core, typically a hollow core carrying a structural adhesive foam. In the known processes the foam is expanded when heated to bridge the small gap between the core and the hollow structure so that the core is bonded to the hollow structure. Typically, as with the acoustic material previously described, the nature of the structural adhesive foam is chosen so that it expands at the temperatures used to bake the coating that is applied to the hollow structure during the e-coat anti-corrosion coating technique widely used in the automobile industry.

The trends in motor vehicle design are towards lighter vehicles to improve fuel consumption. At the same time the safety standards and requirements are becoming more rigorous as indicated by the European Union requirements and the Euro-NCAP impact testing. The use of lighter materials such as aluminum to produce the hollow cross-sectional members that are used as vehicle sub frames has lead to the need for additional reinforcement. There is also a need for reinforcement behind external panels in various locations in the vehicle such as in window and door surrounds particularly in cavities between window and door frames and external panels such as in the reinforcement of hatchback doors and windscreen pillars where they connect with the roof of the vehicle. The present invention may be used to produce parts that can provide such reinforcement.

There are four main types of application where structural reinforcement is required in vehicles. Crash protection where the prevention of vehicle body deformation is important to provide protection for the occupants. Energy absorption to enhance performance after yield. The reduction of flexing or body movement in the vehicle structure particularly to improve durability and reduce stress cracking and the point mobility problems requiring the reduction of resonance by the provision of stiffening. The need for reinforcement is present irrespective of the materials that are used to produce the vehicle structure and the need varies from material to material according to the nature of the reinforcement that is being provided. The reinforcing parts can also reduce the noise created by the motion of a vehicle by having a sound deadening effect as a result of blocking air paths in cavities.

The reinforcing parts are typically placed in the body in white in the same manner as described in relation to acoustic baffles. Accordingly comparable performance in relation to the electrocoat process is required. The reinforcing structures are preferably provided within hollow sections prior to the electrocoat. It is therefore important that the reinforcing structure have minimal impact on the operation and efficiency of the electrocoat process. The structural reinforcing member needs to be located within the hollow section to be reinforced in a manner that enables satisfactory performance of the e-coat process without undesirable movement of the structural reinforcing member. Various means of attachment can be provided for example means such as clips may be moulded in the substrate which can be clipped into holes formed in the walls of the hollow section other than the wall or walls which constitute the external panel. Similarly attachment means such as clips may be formed in the walls of the hollow section, other than the external panel, which can fit into holes in the core of the reinforcing member. Alternatively or additionally the structural reinforcing member may be provided with small lugs, which enable it to stand away from the interior walls of the hollow structure. In this way fastening devices may not be required and the area of contact between the structural reinforcing member and the interior walls of the frame of the vehicle is minimized.

The clearance between the extremity of the reinforcing member and the interior walls of the hollow section should be wide enough to enable the liquid used in the electrocoat bath to flow between the reinforcing member and the interior walls of the sections of the vehicle in sufficient quantity to enable an effective anti-corrosion coating to be deposited. On the other hand, the clearance must not be too wide since this can result in a lack of rigidity in the structure when the expandable adhesive is foamed to bond the structural reinforcing member to the walls of the hollow section other than the external panel. We prefer that the clearance be no more than 1 centimetre and is more preferably 3 to 10 millimetres. The clearance around the whole structure enables a more uniform foam structure to be obtained. As with the acoustic baffles the techniques of present invention can enable a wider gap to be provided for a comparable amount of foamable material

The dimensions of the rigid reinforcing member and the thickness, location and nature of the expandable material are important for the achievement of the desired structural reinforcement. The exterior shape of the reinforcing member should conform substantially to the cross section of the section of the structure it is designed to reinforce. The shape of the reinforcing member may vary along its length as the dimensions of the cross section of the structure change. The size of the reinforcing member induding the expandable adhesive material should be such that there is a small clearance between the extremity of the reinforcing member and the interior walls of the structure to be reinforced to allow for passage of the electrocoat fluid. The foam should contact and bond to other surfaces of the hollow structure so that the rigid reinforcing member is held firmly within the structure. The reinforcing member may have a cellular, honeycomb or ribbed internal structure to provide reinforcement along several different axes and this structure may be provided in the moulding of the substrate. The member may also be provided with holes that will allow the foamable material to expand through the holes to provide an effective bond between the substrate and the automobile frame.

If other components for example bolts are to pass through the reinforcing members during subsequent assembly care must be taken to ensure that holes formed in the reinforcing member for the passage of the bolts are not blocked by the foam as it expands.

The present invention is illustrated by reference to the accompanying drawings in which
Figure 1 shows one half of a mould useful in the present invention and containing a foamable insert material.
Figure 2 shows the mould closed pinching the foamable material.
Figure 3 shows the mould of Figure 2 with the substrate injected into the mould.
Figure 4 is a cross sectional schematic illustration showing the foamable material held within the wall of the mould and projecting into the mould showing a structure produced at the periphery of a moulding according to the present invention
Figure 5 shows a moulding produced according to the present invention.
Figure 6 shows a section of the moulding of Figure 5 after the foamable material has been caused to foam.

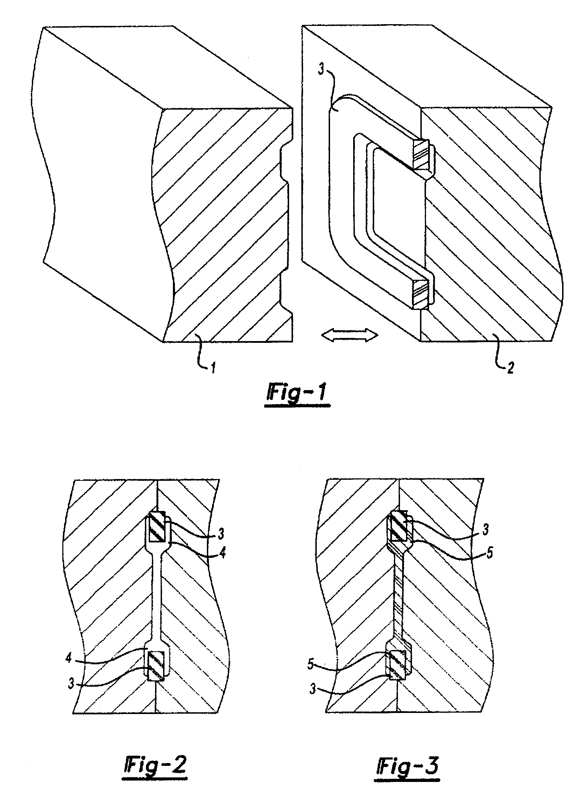

In the Figures the two halves of the mould are (1) and (2) and as shown in Figure 1. After the foamable material (3) is placed in the groove in the mould the mould is closed (as shown by the arrows in Figure 1.)

When closed the mould is as shown in Figure 2 with a cavity (4) around the foamable material. The substrate material (5) may then be injected into the mould through the injection point (not shown) to produce the structure shown in Figure 3.

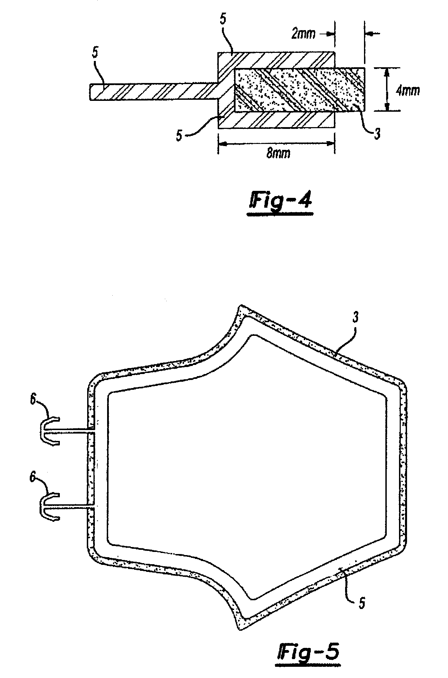

Figure 4 is a cross section of a typical moulding produced and Figure 5 shows an acoustic baffle precursor produced according to the invention provided with clips (6) for attachment to the interior of a hollow component of a vehicle.

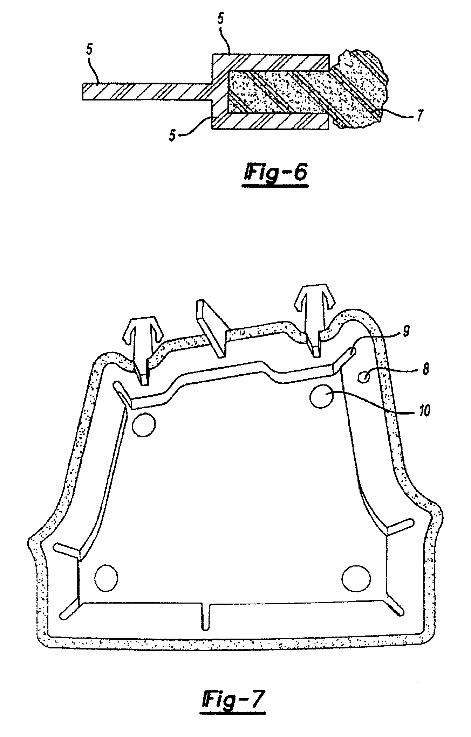

Figure 6 shows the product after foaming showing the foam (7).

Figure 7 shows an over moulded baffle produced according to the present invention in which the substrate (8) around the foamable materials (9) is formed with holes (10) through which the foamable material can expand and, in this way, ensure a greater covering of a foam around and on the perimeter of the substrate.

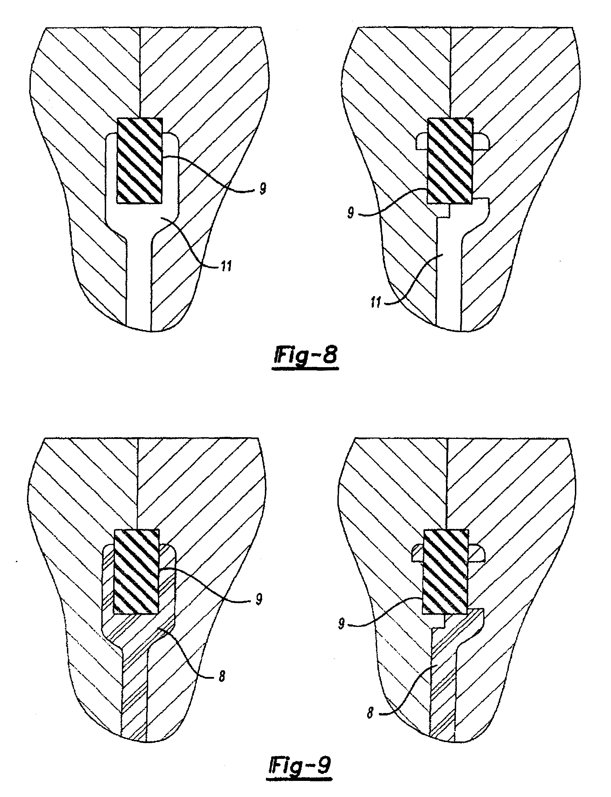

Figure 8 shows how a mould may be constructed to enable the production of a baffle as shown in Figure 7. Figure 8 shows the mould containing the foamable material (9) but without the over moulded substrate material and providing a space (11) for the provision of the substrate material. Figure 9 shows the mould also containing the over moulded substrate material.

## Claims

1. A process for the production of laminar mouldings comprising a layer of a foamable material attached to a substrate wherein a piece of the foamable material is held within the walls of a mould so that part of the piece of foamable material projects into the mould cavity and the substrate is moulded around the foamable material in the mould at a temperature above the temperature at which the foamable material normally foams whereby the foamable material adheres to the substrate during the moulding process and remains unfoamed.

2. A process according to Claim 1 in which the moulding process is injection moulding.

3. A process according to Claim 1 in which the moulding process is blow moulding.

4. A process according to any of the preceding Claims wherein the foamable material is such as to produce a highly expanded soft foam.

5. A process according to Claim 4 in which the foamable material is an ethylene unsaturated ester copolymer.

6. A process according to Claim 5 in which the unsaturated ester is vinyl acetate and/or an acrylate ester.

7. A process according to any of the preceding Claims in which the expandable material has a level of expansion from 100 to 1500%.

8. A process according to any of Claims 1 to 3 in which the foamable material is a reinforcing thermosetting material.

9. A process according to Claim 8 in which the foamable material is a heat activated adhesive material.

10. A process according to Claim 8 or Claim 9 in which the reinforcing thermosetting layer is a foamable epoxy resin or a foamable polyurethane.

11. A process according to any of the preceding Claims in which prior to activation, the foamable material is dry and not tacky to the touch.

12. A process according to any of the preceding Claims in which the substrate is an unfoamable material.

13. A process according to Claim 12 in which the substrate is a polyamide, which may be fibre filled or polypropylene.

14. A process for the production of mouldings comprising a substrate bonded to a foamable material wherein
i) a piece of foamable material is placed within a mould whereby it is partially retained within the walls of the mould and partially projects into the cavity of the mould;
ii) the mould is closed and a positive pressure is applied to the mould to hold the part of the foamable material within the walls of the mould;
iii) the substrate material is introduced into the mould at a temperature above the softening and foaming temperature of the foamable material in a manner that it surrounds and bonds to at least part of the part of the foamable material that projects into the cavity of the mould;
iv) the moulding cycle is completed and the two component moulding removed.

15. A process according to Claim 14 in which up to 10 millimetres of foamable material project into the mould.

16. A process according to Claim 15 in which from 2 to 5 millimetres of foamable material project into the mould.

17. A process according to any of Claims 14 to 16 in which the part of the foamable material held within the mould cavity is no more than 10 millimetres long.

18. A process according to any of Claims 14 to 17 in which the foamable material foams at a temperature in the range 135 to 185°C.

19. A process according to any of Claims 14 to 18 in which the substrate material is injected at a temperature in the range 180°C to 235°C.

20. A process according to any of Claims 14 to 19 in which the moulding cycle is up to 15 seconds.

21. A process according to Claim 20 in which the moulding cycle is up to 10 seconds.

22. A multilayer moulding comprising a foamable material part of which is sandwiched between two layers of a substrate and part of which projects beyond the substitute, the foamable material foaming at a temperature below the softening point of the substrate wherein from 2 to 10 millimetres of the foamable material project beyond the substrate.

23. A multilayer moulding according to Claim 22 in which the sandwich structure contains from 2 to 10 millimetres of the foamable material.

24. The use of a multilayer moulding according to Claim 22 or Claim 23 for the provision of acoustic baffles in hollow structures.

25. The use of a multilayer moulding according to Claim 22 or Claim 23 for the provision of structural reinforcement in hollow structures.
